# DEMANDE DE BREVET EUROPEEN

(11) **EP 2 750 307 A1**
(43) Date de publication de la demande: **02.07.2014**
(21) Numéro de dépôt: 12306681.3
(22) Date de dépôt: 27.12.2012
(51) Int. Cl.: H04B 10/116, G06F 13/00, G06F 3/041, H04M 1/725

(54) **Interface de communication pour équipement comprenant un écran tactile**

(71) Demandeur: Gemalto SA, 92190 Meudon (FR)
(72) Inventeur: Poirier, Hervé, 92190 Meudon (FR); Ligotzki, Jean-Pierre, 92190 Meudon (FR); Leroy, Pascal, 92190 Meudon (FR)
(74) Mandataire: Cour, Pierre

(57) **Abrégé**

Ce brevet présente un dispositif d'interfaçage ID pour équipement à un écran tactile. Le dispositif ID comprend une unité de traitement µC reliée à au moins un actionneur TE permettant d'émuler un contact actif sur l'écran tactile de l'équipement, au moins un capteur optique OS placé à proximité du au moins un actionneur TE et au moins un port de communication SP1, SP2, SPn.

## Description

### DOMAINE

L'invention se rapporte à une interface de communication pour équipement comprenant un écran tactile. Le domaine de l'invention est en relation avec des appareils de communication tels que des téléphones de type Smartphones ou encore des tablettes. Plus généralement, l'invention concerne tous les dispositifs disposant d'un écran tactile.

### ART ANTERIEUR

Actuellement, il existe différentes options pour établir une communication entre différents appareils électroniques nomades.

Les équipements ayant un écran tactile sont de plus en plus nombreux et interagissent ensemble de plus en plus au travers des réseaux, des applications et des connexions directes telles que des liaisons Bluetooth ou USB. Les besoins d'interconnexion de ces équipements sont croissants. Un inconvénient est que la démultiplication des protocoles d'échanges, des standards et des normes propriétaires nuit à l'interopérabilité des équipements nomades des différents constructeurs.

En outre, les différentes connectiques développées sont également un frein à l'interopérabilité des liaisons filaires entre équipements électroniques. En outre, pour des raisons de forme et de compacité, de plus en plus d'appareils ne disposent plus de connecteurs.

Des moyens alternatifs peuvent pallier à ces inconvénients. Typiquement, les communications sonores, par l'utilisation du haut-parleur et/ou du microphone d'un équipement nomade, pourraient permettre un échange de données standard et commun à tous les équipements. Cependant, cette solution présente l'inconvénient de constituer un potentiel désagrément sonore et ne permet pas d'utiliser cette sortie pour sa destination première à savoir l'utilisation d'un casque et/ou d'un microphone.

### RESUME DE L'INVENTION

L'invention permet de résoudre les inconvénients précités et propose un nouveau dispositif pour interfacer des objets communicants disposant d'une interface filaire classique.

L'invention est un dispositif d'interfaçage pour équipement à un écran tactile. Principalement, le dispositif d'interfaçage comprend une unité de traitement reliée à au moins un actionneur permettant d'émuler un contact actif sur l'écran tactile de l'équipement, au moins un capteur optique placé à proximité du au moins un actionneur, et au moins un port de communication.

Préférentiellement, l'au moins un actionneur peut être constitué d'une électrode destinée à être placée sur l'écran tactile. L'unité de traitement peut contrôler la variation de charge de l'électrode afin de moduler la charge en fonction de donnée numérique à transmettre à l'équipement à écran tactile. L'unité de traitement peut comporter des moyens pour transformer le signal provenant du capteur optique en une suite de données numériques. L'unité de traitement peut être reliée à au moins une mémoire pour mémoriser des données numériques provenant d'au moins un port de communication ou du capteur optique avant de les retransmettre par l'intermédiaire de l'actionneur ou de l'interface de communication. Le port de communication peut être conforme à un standard de communication de type série.

### BREVES DESCRIPTION DES FIGURES

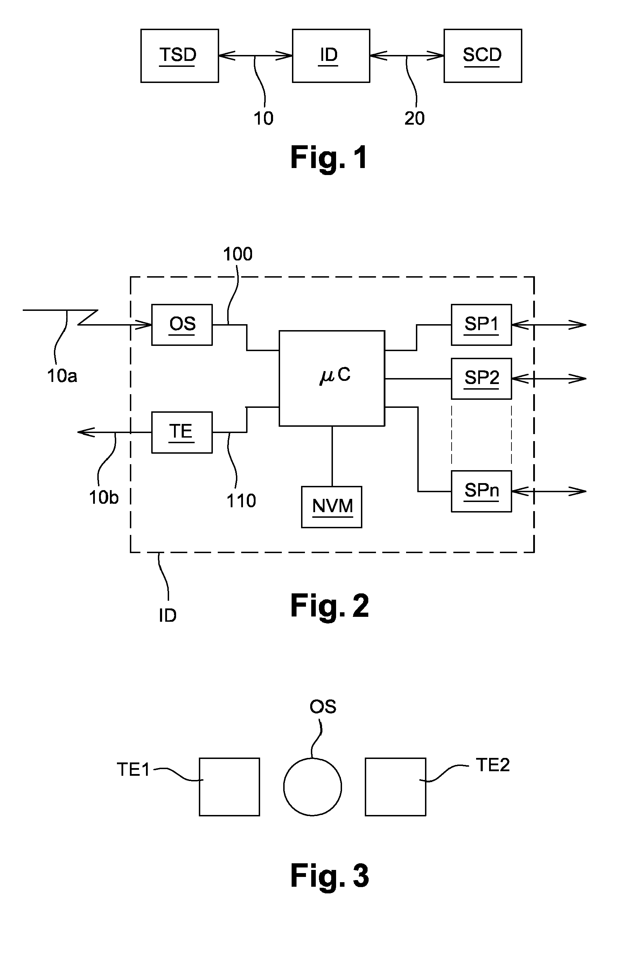

D'autres caractéristiques et avantages de l'invention ressortiront à la lecture de la description détaillée qui suit, en référence aux figures annexées, qui illustrent :
■ figure 1 : une configuration d'utilisation du dispositif selon l'invention ;
■ figure 2 : un exemple d'architecture du dispositif de l'invention ;
■ figure 3 : un exemple de disposition possible des actionneurs et d'un détecteur optique.

### DESCRIPTION

La figure 1 représente un équipement à écran tactile TSD, un dispositif communiquant SCD et un dispositif d'interface ID. La communication entre l'équipement TSD et le dispositif interface ID se fait par un lien 10 constitué dans un sens par une liaison optique et dans l'autre sens par une émulation de contact. Grâce au lien 10, l'équipement n'a plus besoin d'interface de communication autre que son écran tactile. La communication entre le dispositif communicant SCD et le dispositif interface se fait par l'intermédiaire du lien 20 qui est par exemple une liaison série.

L'équipement à écran tactile TSD est par exemple un Smartphone ou une tablette qui dispose d'un écran tactile de type multipoint. La plupart des écrans utilisés de ce type sont des écrans de type capacitif. Un contact actif comprend une pression sur une surface solide de type verre, laquelle est parcourue par une grille électriquement chargée et presque invisible à l'oeil nu. La variation de charges électriques sur la plaque de verre lors du contact transfère peut être détectée et localisée par l'équipement

Pour détection, l'équipement comporte un microcontrôleur relié à la grille et applique un algorithme de calcul sur différents points de mesures réalisées sur la grille. L'algorithme permet de déterminer le ou les points d'impacts, par exemple dans le cas d'un toucher multiple simultané sur l'écran.

L'émulation d'un toucher de l'écran se fait par exemple à l'aide d'une électrode située en contact ou presque avec l'écran tactile. L'application d'un potentiel sur cette électrode qui est modulé dans le temps permet de simuler une succession de petites tapes sur l'écran tactile. L'écart et la durée de ces petites tapes permet d'encoder des données numériques avec un débit de l'ordre de quelques dizaines de bits par seconde.

La figure 2 détaille le dispositif d'interface ID objet de l'invention. Le dispositif interface ID comprend principalement une unité de traitement µC reliée à une mémoire NVM, un capteur optique OS, un actionneur TE, et une pluralité de ports de communication SP1, SP2 à SPn. L'unité de traitement µC est par exemple un microcontrôleur disposant d'une pluralité de ports d'entrées/sorties analogique et numérique permettant des usages multiples. La mémoire NVM est préférentiellement de type non volatile afin de pouvoir mémoriser les programmes et informations de l'unité de traitement µC même hors tension. Les ports de communication sont préférentiellement des ports de type série correspondant à différents standards afin que l'on puisse connecter différent types d'appareils suivant l'interface dont ils disposent. A titre d'exemple on peut avoir un port SP1 conforme au standard USB, un port SP2 conforme au standard I2C, un port SPn conforme au standard RS232 et éventuellement un autre conforme au standard SPI. II est également possible de prévoir un port pour recevoir une mémoire externe, tel que par exemple un port SD.

Le capteur optique OS et l'actionneur TE sont placés à proximité afin que le l'actionneur TE puisse permettre à l'équipement à écran tactile de localiser la zone où se trouve le capteur optique. A titre d'exemple, la figure 3 représente de manière grossie le positionnement du capteur optique OS placé entre deux actionneurs TE1 et TE2. Les actionneurs TE1 et TE2 peuvent être couplés ou non envoyant un même signal ou des signaux complémentaires. L'équipement à écran tactile peut repérer les points de contact des deux électrodes TE1 et TE2 et envoyer le signal lumineux entre les deux électrodes TE1 et TE2 à destination du capteur optique OS.

Le capteur optique OS placé au-dessus de l'écran transforme le signal optique 10a venant de l'écran en signal électrique 100. Le signal électrique 100 est fournit au microcontrôleur µC sur une entrée analogique. Le microcontrôleur transforme le signal analogique et le transforme en données numériques.

Les données numérique à transmettre à l'écran tactile sont transformé en signal électrique 110 qui est fournit à l'actionneur TE. Le signal électrique 110 fait varier la charge de l'actionneur TE afin de transmettre un signal 10b à l'écran tactile sous forme de variation de charge.

Le microcontrôleur µC comporte également une mémoire destinée à servir de mémoire tampon pour les données échangée entre l'écran tactile et le port de communication actif. En effet, la communication à travers l'écran tactile n'étant que de quelques bits par seconde il est préférable de mémoriser les données numériques à échanger avec l'un des ports série.

Vu le peu de données échangées, on pourrait se demander à quoi sert de faire une interface de si bas débit alors que l'on recherche plutôt à maximiser le débit binaire sur les interfaces de communication. Un premier exemple se situe dans le milieu médical où l'on dispose de machine permettant de superviser les paramètres vitaux. Pour faire un relevé des paramètres il est possible de connecter un câble sur port série. Pour pouvoir directement transférer les informations sur une tablette, il est possible d'utiliser l'invention en connectant le dispositif interface ID à la machine de supervision. Grâce à l'un des protocoles série on peut transférer les paramètres vitaux mesurés (température, rythme cardiaque, pression artérielle,...) dans la mémoire de l'unité centrale µC du dispositif interface ID.

Les paramètres ayant été transférés dans le dispositif interface ID, il suffit de mettre l'actionneur TE et le capteur optique OS sur l'écran d'une tablette, par exemple dans une zone correspondant à une case de tableau de relevé du patient concerné. La détection de la mise en contact, ou l'appui sur un bouton poussoir déclenche un échange entre la tablette et le dispositif interface. A titre d'exemple, quelques simulations de touché définissant un message caractéristique signalent à la tablette que le dispositif interface ID souhaite envoyer des données. En réponse la tablette envoie un signal lumineux localisé au niveau des touchés qui ont eu lieu. Cet échange d'initialisation de communication étant fait, les données correspondant aux paramètres vitaux peuvent ensuite être transférées.

Dans un deuxième exemple, un technicien doit effectuer des relevés de compteurs dans une installation qu'il n'est pas possible de modifier mais qui dispose de prises de relevé. Le technicien vient se branché avec le dispositif interface qui relève les données de relevé. En appliquant l'actionneur TE et le capteur optique OS sur l'écran de son téléphone portable, il transfert les données dans son Smartphone qui peut ensuite les transmettre à un central de gestion de données.

L'invention telle que décrite peut être modifiée ou améliorer sans sortir du cadre défini par les revendications. Entre autre variante, le nombre d'actionneurs TE et de capteurs optiques OS peut être augmenté afin d'augmenter le débit entre le dispositif interface ID et l'équipement à écran tactile. Le nombre de ports de communication peut également être réduit afin de réduire le coût du dispositif interface.

Dans une autre variante la mémoire NVM peut être intégrée dans le microcontrôleur µC.

## Revendications

1. Dispositif d'interfaçage (ID) pour équipement à un écran tactile, **caractérisé en ce qu'il** comprend une unité de traitement (µC) reliée à:
• au moins un actionneur (TE) permettant d'émuler un contact actif sur l'écran tactile de l'équipement ;
• au moins un capteur optique (OS) placé à proximité du au moins un actionneur (TE) ; et
• au moins un port de communication (SP1, SP2, SPn).

2. Dispositif d'interface de la revendication 1, dans lequel au moins un actionneur (TE) est constitué d'une électrode destinée à être placée sur l'écran tactile.

3. Dispositif d'interface de la revendication 2, dans lequel l'unité de traitement (µC) contrôle la variation de charge de l'électrode (TE) afin de moduler la charge en fonction de donnée numérique à transmettre à l'équipement à écran tactile.

4. Dispositif d'interface de la revendication 1, dans lequel l'unité de traitement (µC) comporte des moyens pour transformer le signal provenant du capteur optique (OS) en une suite de données numériques.

5. Dispositif d'interface de la revendication 1, dans lequel l'unité de traitement est reliée à au moins une mémoire (NVM) pour mémoriser des données numériques provenant d'au moins un port de communication (SP1 à SPn) ou du capteur optique (OS) avant de les retransmettre par l'intermédiaire de l'actionneur (TE) ou de l'interface de communication (SP1 à SPn).

6. Dispositif d'interface de la revendication 1, dans lequel le port de communication (SP1 à SPn) est conforme à un standard de communication de type série.

7. Dispositif d'interface de la revendication 6, dans lequel le standard de type série est choisi parmi : le standard USB, le standard I2C, le standard RS232, le standard SPI.
